**Europäisches Patentamt**

**European Patent Office**

**Office européen des brevets**

(19)

(11) Publication number: **0 126 522**
**A1**

# EUROPEAN PATENT APPLICATION

(12)

(21) Application number: **84301327.7**

(22) Date of filing: **01.03.84**

(51) Int. Cl.³: **H 01 G 9/02**

(30) Priority: **19.05.83 GB 8313854**

(43) Date of publication of application: **28.11.84**
**Bulletin 84/48**

(84) Designated Contracting States: **DE FR IT**

(71) Applicant: **STANDARD TELEPHONES AND CABLES PUBLIC LIMITED COMPANY, 190 Strand, London, WC2R 1DU (GB)**

(72) Inventor: **Drake, Miles Patrick, 79, Morley Grove, Harlow Essex (GB)**
Inventor: **Akhtar, Arjumand Bano, 136, Barley Croft, Harlow Essex (GB)**

(74) Representative: **Dennis, Mark Charles, STC Patent Department Edinburgh Way, Harlow Essex CM20 2SH (GB)**

(54) **Improvements in electrolytic capacitors.**

(57) An electrolyte for an aluminium wet electrolytic capacitor comprises a solution in dimethyl formamide of a tertiary diphatic amine, together with an acid material including maleic acid. Advantageously the acid material also includes boric acid and orthophosphoric acid. The electrolyte improves the forming characteristics of an anodised foil and significantly increases the scintillation voltage.

EP 0 126 522 A1

# IMPROVEMENTS IN ELECTROLYTIC CAPACITORS

This invention relates to electrolytic capacitors and in particular to electrolyte compositions for use in such capacitors.

According to one aspect of the invention there is provided an electrolyte for an aluminium electrolytic capacitor, characterised in that the electrolyte comprises a solution in dimethyl formamide of a tertiary aliphatic amine together with an acidic component including maleic acid.

According to another aspect of the invention there is provided an aluminium wet electrolytic capacitor, including first and second electrode foils at least one of which is provided with a dielectric surface layer, and an electrolyte in contact with the dielectric layer, characterised in that said electrolyte comprises a solution in dimethyl formamide of a tertiary aliphatic amine, and an acidic component including maleic acid.

Advantageously the acidic component of the electrolyte also includes boric acid which has been found to provide a high electrical conductivity. The acidic component may also contain one or more inhibiting agents such as orthophosphoric acid which improve the ability of the aluminium foil to reform surface oxide in the event of local failure.

We have found that such electrolytes provide improved scintillation voltages and have a significant beneficial effect on the formation characteristics of aluminium net electrolytic capacitors. The tertiary amine may comprise triethylamine or tributylamine.

Preferably the conductivity of the electrolyte at ambient temperature is greater than 5 millisiemens.

We have found that a particularly advantageous high conductivity electrolyte composition can be formed from a mixture of dimethyl formamide (DMF), triethylamine, maleic acid, boric acid and orthophosphoric acid in the following proportions:-

| | |
|---|---|
| DMF | 100 ml |
| Triethylamine | 8.8 ml |
| Maleic acid | 8.16 g |
| Boric acid | 1 g |
| Orthophosphoric acid | 0.1 ml |

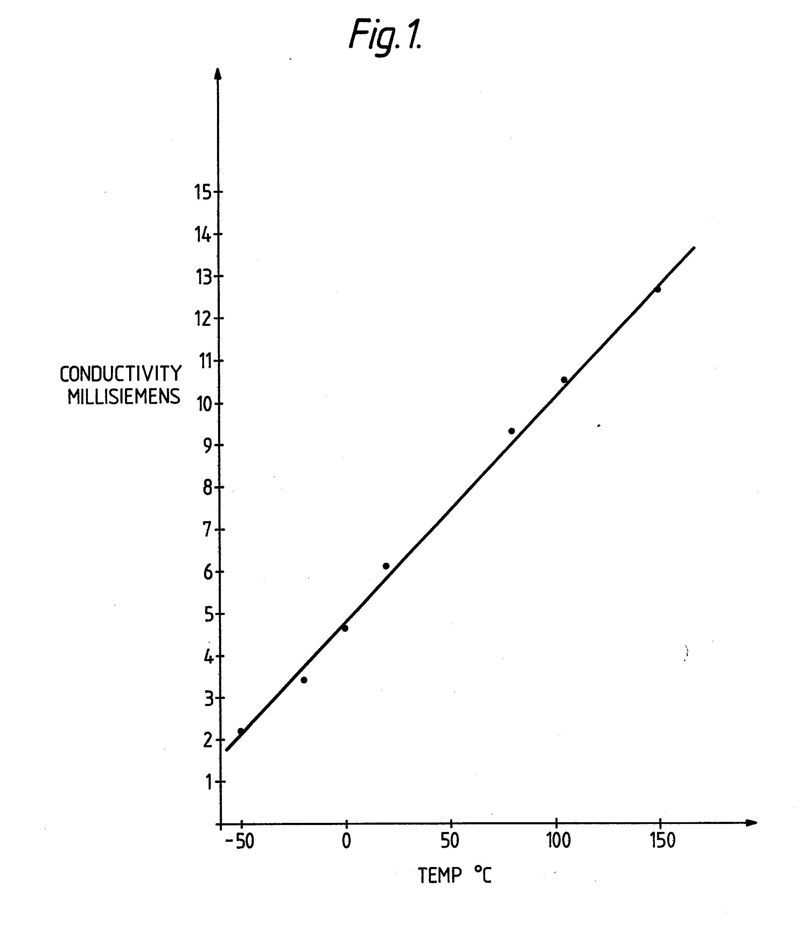

This composition provides a scintillation voltage of 216 volts at $20^{\circ}$C and 210 volts at $105^{\circ}$C. The conductivity was measured over a range of temperatures, the results being shown in Fig. 1 of the accompanying drawings.

Both boric acid and phosphoric acid have a significant effect on the scintillation voltages and formation characteristics of anodised aluminium foils. To demonstrate these effects a stock solution of 0.7 molar maleic acid in DMF and trimethylamine (TEA) was prepared. An aluminium foil type 934 was cut into 1 cm square test pieces which were then anodised either in the stock solution or in the stock solution containing phosphoric acid ($H_3PO_4$) and boric acid.

The anodisation voltages and current were monitored during the forming process. The voltage was found to rise slowly and smoothly until a threshold was reached at which current spikes were observed. This threshold was taken as the scintillation voltage. The results of the tests are summarised in the following table.

Table 1

| 0.7 molar maleic in DMF + TEA | Conductivity ms | Scintillation voltage | Charge coulombs |
|---|---|---|---|
| 1. Cold | 11.0 | 98 volts | 8.1 |
| 2. Heated to 140°C & cooled | 11.6 | 93 | 7.2 |
| 3. 0.1% $H_3PO_4$ | 11.5 | 185 | 12.8 |
| 4. 0.1% $H_3PO_4$ + 1% boric acid | 11.2 | 216 | 15.8 |
| 5. 0.1% $H_3PO_4$ at 105°C | 18.3 | 216 | 17.0 |

As can be seen from the table that addition of 0.1% phosphoric acid approximately doubles the scintillation voltage whilst the addition of 1% boric acid further increases this voltage.

The conductivity of the electrolyte is significantly higher than that of conventional compositions and can be enhanced by optimising the ratio of amine to acid. To determine this optimum value a series of solutions of maleic acid in DMF were prepared. To each of these solutions the tertiary amine was added slowly and the conductivity was determined. The conductivity was found to increase to a peak value followed by a slow decrease with further addition of the amine. The measured peak conductivity values for tributylamine (TBA) and triethylamine (TEA) are summarised in Table 2 below.

- 4 -

0126522

## Table 2

| | maximum conductivity in mS | | | |
|---|---|---|---|---|
| | 0.5 Molar maleic acid | 0.7 Molar maleic acid | 0.9 Molar maleic acid | 1.1 Molar maleic acid |
| heated to 125°C | 5.0 | 8.4 | 6.0 | – |
| room temp. | 6.2 | 11.2 | 7.6 | 7.5 |

- 5 -    0126522

The electrolyte composition is particularly suitable for wound electrolytic capacitors, the capacitors being wound from anode and cathode foils, impregnated with the electrolyte and then formed by any of the conventional manufacturing techniques.

- 6 -   0126522

CLAIMS:-

1. An electrolyte for an aluminium electrolytic capacitor, characterised in that the electrolyte comprises a solution in dimethyl formamide of a tertiary aliphatic amine together with an acidic component including maleic acid.

2. An electrolyte as claimed in claim 1, characterised in that the acidic component further includes boric acid.

3. An electrolyte as claimed in claim 1 or 2, characterised in that the acid component further includes orthophosphoric acid.

4. An electrolyte as claimed in claim 1, 2 or 3, characterised in that it has an electrical conductivity greater than 5 millisiemens measured at ambient temperature.

5. An aluminium electrolytic capacitor provided with an electrolyte as claimed in any one of claims 1 to 4.

6. An aluminium wet electrolytic capacitor, including first and second electrode foils at least one of which is provided with a dielectric surface layer, and an electrolyte in contact with the dielectric layer, characterised in that said electrolyte comprises a solution in dimethyl formamide of a tertiary aliphatic amine, and an acidic component including maleic acid.

0126522

## Fig.1.

M.P. DRAKE - 21- 3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 835 055 (LES CONDENSATEURS SIC-SAFCO) * Column 2, lines 30-59; column 4, lines 6-13 * | 1-6 | H 01 G 9/02 |
| X | US-A-3 719 602 (P.L. MALLORY & CO. INC.) * Column 4, lines 9-35 * | 1-3,5, 6 | |
| A | DE-A-2 508 904 (SANYO ELECTRIC CO., LTD.) * Pages 8,9 * | 1 | |

**TECHNICAL FIELDS SEARCHED (Int. Cl. ³)**

H 01 G

The present search report has been drawn up for all claims

| Place of search THE HAGUE | Date of completion of the search 17-07-1984 | Examiner SCHUERMANS N.F.G. |
|---|---|---|

EPO Form 1503. 03.82